# EUROPEAN PATENT APPLICATION

(11) **EP 4 471 523 A1**
(43) Date of publication of application: **04.12.2024**
(21) Application number: 24179518.6
(22) Date of filing: 03.06.2024
(51) Int. Cl.: G05B 23/02

(54) **METHOD OF PREVENTIVE MAINTENANCE OF INDUSTRIAL PLANT**

(30) Priority: 01.06.2023 BE 202305445
(71) Applicant: Green Engineering Experts, 9420 Erpe-Mere (BE)
(72) Inventor: De Boeck, Frans, 9420 Erpe-Mere (BE)
(74) Representative: Sarlet, Stephanie

(57) **Abstract**

Method of preventive maintenance of an industrial plant comprising the following steps: (a) the maintenance of a wear part removed from the industrial plant; (b) testing of the wear part after the maintenance step, wherein, for at least one operating parameter of the wear part, it is determined whether this operating parameter is within a predetermined range limited by at least one threshold value; (c) repeating steps a and b at least once after a period of use of the wear part in the industrial plant; (d) determining a trend for the operating parameter of the wear part based on the tests; and (e) predicting, based on the trend, when the operating parameter of the wear part will no longer be within the predetermined range. At least one threshold value is dynamic, determined on the basis of a set of measured values for the operating parameter obtained after maintenance and testing wear parts of the same type.

## Description

### Field of the invention

The present invention relates to a method for preventive maintenance of industrial plants, more specifically for predicting when wear parts of industrial plants need to be replaced. The present invention also relates to a computer-implemented method and system for the management of wear parts of industrial plants.

### Background art

Wear parts are used in numerous industrial plants in various industries, e.g. in process industries such as petroleum, petrochemicals, plastics, industrial gases, oil filtration, etc. These wear parts are periodically maintained, during which they are removed from the plant and subjected to maintenance. After a number of maintenance operations, the wear parts no longer meet the predetermined requirements and must be replaced.

An example of such a wear part is a filter, for example a filter with a plurality of openings of a specific size intended to stop particles with dimensions above the size of the filter openings. During use in the industrial plant, material will gradually accumulate at the level of the filter in such a way that it will allow little or no substances to pass through over time. By removing the filter and cleaning it by means of maintenance operations with e.g. thermal and/or chemical cleaning, the material that has accumulated can be removed. However, this cleaning can also cause material from the filter itself to wear off and the filter openings to become larger. After a number of maintenance operations, the filter openings will have become too large for the intended purposes in the industrial plant and the filter will have to be replaced.

In the process industry, the clogging of the filters during use in the plant is followed up by measurement of differential pressures across the filters. However, no measurement is provided in the process to monitor the wear of such filters, the size of the filter openings and/or whether the filter is still retaining the correct particles. However, in all these industrial plants, such filters are specifically designed for that purpose: to stop contamination of a certain size in order to ensure the quality of the end product.

### Summary of the disclosure

It is a first aim of the present invention to provide a method for the preventive maintenance of industrial plants which makes it possible to predict, or better predict, when a wear part will need to be replaced.

It is a second aim of the present invention to provide a computer-implemented method and system for the management of wear parts of industrial plants, which makes it possible to predict, or better predict, when an wear part will need to be replaced.

In a first aspect, which can be combined with other aspects and/or embodiments described herein, the invention relates to a method for the preventive maintenance of an industrial plant comprising the following steps: (a) the maintenance of a wear part removed from the industrial plant; (b) testing of the wear part after the maintenance step, wherein, for at least one operating parameter of the wear part, it is determined whether this operating parameter is within a predetermined range limited by at least one threshold value; (c) repeating steps a and b at least once after a period of use of the wear part in the industrial plant; (d) determining a trend for the operating parameter of the wear part based on the tests; and (e) predicting, based on the trend, when the operating parameter of the wear part will no longer be within the predetermined range.

In the process according to the invention it is therefore provided to, after maintenance, test the wear part, e.g. a filter or other. Therefore, for at least one operating parameter of the wear part, it is determined whether this operating parameter is still within a predetermined range. If, for example, a threshold value of that range is exceeded, the wear part is no longer sufficient and must be replaced.

In embodiments according to the invention, at least one threshold value of the predetermined range may be a dynamic threshold value, the dynamic threshold value being determined on the basis of a set of measured values for the operating parameter obtained after maintenance and testing wear parts of the same type.

In embodiments according to the invention, the dynamic threshold value can be adjusted over time on the basis of additional, similarly obtained measured values for the operating parameter.

In embodiments according to the invention, the dynamic threshold value can be determined statistically, preferably by determining the median and the standard deviation σ of the set of measured values. For example, the dynamic threshold value can be set at 1 to 3 × σ, preferably 2 × σ.

In embodiments according to the invention, at least one operating parameter may be chosen from the group comprising: weight, bubble point, back pressure.

In embodiments according to the invention, an initial set preferably includes at least 50 measured values, preferably at least 75 measured values, more preferred at least 100 measured values.

In embodiments according to the invention, the trend can initially be set to a predetermined slope that corresponds to an expected wear of the wear part. Preferably, the trend is determined on the basis of these measured values after a predetermined series of measured values obtained for the respective wear part, preferably after a series of at least 5 measured values.

In a second aspect, which may be combined with other aspects and/or embodiments described herein, the invention relates to a computer-implemented method for managing wear parts of an industrial plant, comprising the following steps for each wear part: (a') receiving measured values relating to at least one operating parameter of a wear part, the measured values being measured during the testing of the wear part after a maintenance step; (b) determining, on the basis of the results of the measurements, whetherthe operating parameter of the wear part is within a predetermined range limited by at least one threshold value; (c) repeating steps (a) and (b) at least once after a period of use of the wear part in the industrial plant; (d') determining a trend for the operating parameter of the wear part on the basis of the measured values received; and (e') predicting, on the basis of the trend, when the operating parameter of the wear part will no longer be within the predetermined range.

In embodiments, at least one threshold value of the predefined range may be a dynamic threshold value, the dynamic threshold value being determined on the basis of a set of measured values for the operating parameter obtained during the testing of wear parts of the same type each time after a maintenance step.

In further aspects, the invention relates to a computer system on which the computer-implemented method as described herein is implemented and a permanent data carrier on which the computer-implemented method as described herein is stored in a computer-readable format.

### Brief description of the drawings

Embodiments of the present invention will be discussed in more detail below, with reference to the attached drawings.
Figs. 1-5 show an embodiment of a management system according to the invention for the management of wear parts of an industrial plant. More specifically, Fig. 1-5 show screens of such a management system, implemented on a computer.
Fig. 6 shows an example of wear parts, more specifically a bundle of filter elements before maintenance and after maintenance.
Fig. 7 shows another example of wear parts, more specifically a bundle of colanders before and after maintenance.

### Description of embodiments

In the following, certain embodiments according to the invention are described with reference to certain drawings, but the invention is not limited thereto. The drawings described are only schematic and non-restrictive. In the drawings, the size of certain elements may be exaggerated and not drawn to scale for illustrative purposes. The dimensions and relative dimensions do not necessarily correspond to actual practical implementations of the invention.

In addition, the terms first, second, third and the like are used in the description and in the claims to distinguish between similar elements and not necessarily to describe a sequential or chronological order. The terms are interchangeable under appropriate circumstances and the embodiments of the invention may be applied in sequences other than those described or illustrated herein.

In addition, the terms top, bottom, over, under, and the like are used in the description and the claims for illustrative purposes and not necessarily to describe relative positions. The terms so used are interchangeable under appropriate circumstances and the embodiments of the invention described herein may be applied in orientations other than those described or illustrated herein.

Furthermore, the various embodiments, although referred to as 'preferred forms', should be understood as an example of how the invention can be carried out rather than as a limitation of the scope of the invention.

The term "comprising" used in the claims should not be construed as being limited to the means or steps mentioned below; the term does not exclude other elements or steps. The term should be interpreted as specifying the presence of the referenced characteristics, elements, steps or components, but does not exclude the presence or addition of one or more other characteristics, elements, steps or components, or groups thereof. The scope of the expression a device comprising means A and B' should therefore not be limited to devices consisting only of components A and B. The meaning is that, with regard to the present invention, only the components A and B of the device are listed, and the claim is further to be interpreted as also containing equivalents of these components.

The methods and systems described herein relate to a form of preventive maintenance in the field of industrial processes and plants in which certain wear parts are used, i.e. parts that are intended to be maintained and/or replaced over time. A special feature of the method is that the wear parts can undergo a first wear during production ("in-line"), i.e. during the operation or production of the industrial plant, and a second wear outside of production ("offline"), more specifically during a maintenance where wear is caused by the maintenance or cleaning techniques used. The methods and systems described herein find application in many industrial industries, such as petroleum, petrochemicals, plastics, industrial gases, oil filtration, and others.

Hereinafter, the method described herein is explained using the example of an industrial filter. However, the methods and systems described herein can also be applied to all other wear parts known to a person skilled in the art. In particular, the method described herein is suitable for non-intelligent wear parts, i.e. wear parts without electronics or sensors, such as filters or filter elements of filter bundles, sieve or strainer elements, flame arresters, or others. The wear parts can be monitored or guarded during use in the system, this means that the operation of the wear part is measured by means of sensors or the like, but this is not essential. It is, for example, also possible to remove the wear parts for maintenance after regular periods of time or after a predetermined number of hours of use, without any measurement taking place during use.

An example of a wear part that is used in an industrial plant is an industrial filter, which is used, for example, in the production of plastics, where the filter is exposed to high pressures and temperatures when filtering these plastics. If the filter becomes clogged after a while, it is removed from production. The degree of clogging can be measured in-line based on increasing differential pressures across the filter, and if the differential pressure exceeds a certain threshold value, the filter is considered "clogged". A clogged filter may be full of solidified plastic and/or captured particles.

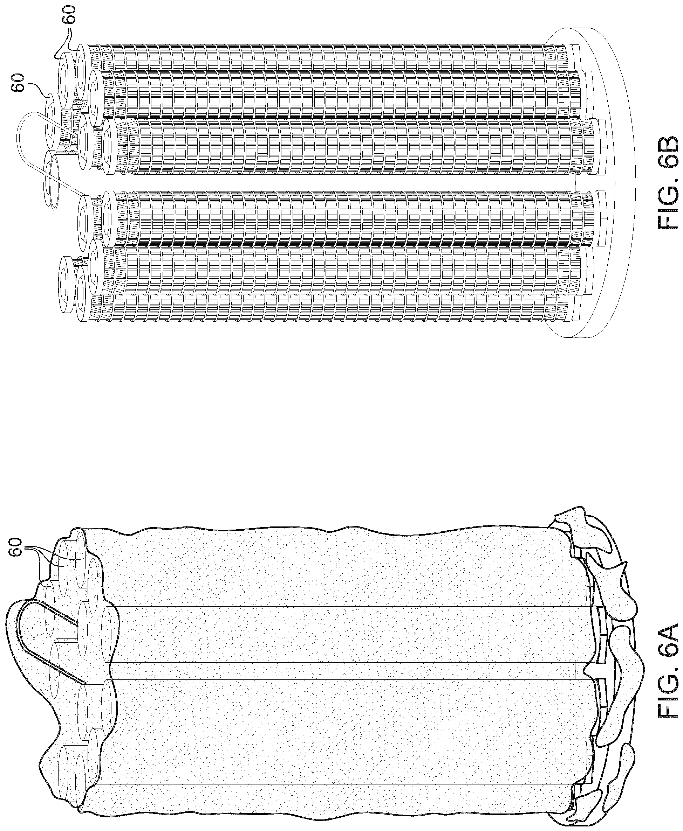

In such plants, it is common to place the filters 60 in bundles. An example of such a bundle is shown in Fig. 6 with a clogged filter bundle (Fig. 6A) and a cleaned filter bundle (Fig. 6B). The filters or filter elements 60 can be individually removed from the bundle and cleaned and as such can be individually managed in the method and computer system described herein.

The removed filter bundles or individual filter elements 60 can then be subjected to maintenance, more specifically cleaning, after which the filter can be reused in the industrial plant. During such maintenance, for example, the solidified plastic can be melted away at high temperature and deposited particles can be chemically removed. Fig. 6A shows a clogged filter bundle before thermal and/or chemical cleaning and Fig. 6B shows a cleaned filter bundle.

In both phases, during both production and cleaning, it is thus possible that the filter will undergo external loads, both of which can give rise to wear. The tests or (laboratory) measurements that are carried out after each maintenance to determine whether the filter still meets the predetermined requirements, therefore give a measurement result that can be a composite result of both types of wear.

The purpose of the method described herein is to be able to predict when a filter will reach the end of its life, taking into account a combination of external influences that the filter has undergone, in particular both in-line during production and offline during maintenance.

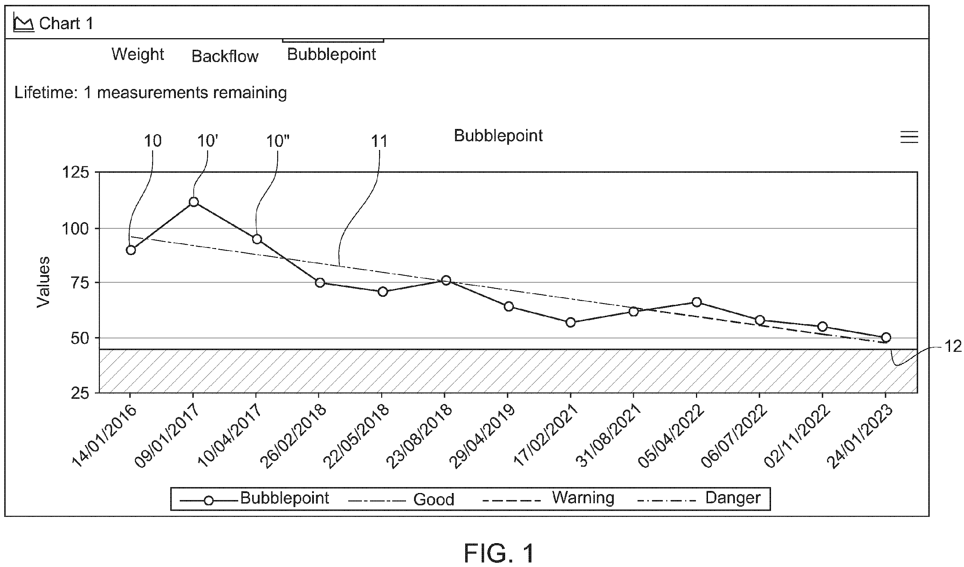

Figs. 1-3 show screens of a management system, implemented on a computer, for managing a plurality of filters (or wear parts) of an industrial plant. For example, this management system can be used to manage a plurality of filters of the same type, which are removed from an industrial plant for maintenance at regular intervals (when a blockage is detected, or after a predetermined number of hours of use, etc.). Each time after maintenance, measurement data is loaded for each filter, which is given a unique identifier in the system's database. These measurements can be, for example, measurements of the filter's operating parameters, such as weight, backflow, bubble point or others. In general, one or more operating parameters of the filter (or wear part) can be defined in the management system, which can be measured in a laboratory test after a maintenance and can therefore give a picture of the wear on the filter.

Fig. 1 shows an example of a graph representing a sequence of measurement results 10, 10', 10" of a filter, each after a maintenance. The measurement that happens in this case is the bubble point.

The bubble point method is the most commonly used method for determining the pore size of the filter. The method is based on the fact that for a given liquid and pore size with constant humidification, the pressure required to force an air bubble through the pore is inversely proportional to the size of the pore. So, the larger the pore, the less pressure is needed to push an air bubble through the pore. The procedure for the bubble point measurement is, for example, described in American Society for Testing and Materials Standard (ASMT) Method F316.

The graph in Fig. 1 shows the evolution of the measurements on an individual filter. The gradual decrease in pressure ("Bubble point" or bubble point value) shown on the graph corresponds to an increase in the size of the filter openings or pores and therefore to the wear of the filter. If the openings become too large, the filter will no longer retain unwanted particles during production.

As shown in Fig. 1, a trend is determined on the basis of the successive measuring points 10, 10', 10" (date, bubble point). In the embodiment shown, the trend is a straight line 11, which is determined using a well-known "curve fitting" technique. For example, the straight line can be determined using the least squares method.

More generally, in the methods and systems described herein, all known "curve fitting" techniques can be used to determine a trend line based on a number of measurement points. The trend line can be a straight line, but second-degree or higher-degree functions can also be applied. Possible "curve fitting" techniques include interpolation, regression analysis, or others.

In the next step, based on the trend or trend line, it can be determined after how many cycles the bubble point value for the filter will no longer be in the desired range. As shown, the range is divided into a "green zone" with a good value ("good"), an "orange zone" with a bubble point value approaching the lower limit ("warning") and a "red zone" in which the bubble point value is so close to the lower limit 12 that there is a high risk that the value will be below the lower limit after a subsequent cycle ("danger").

These zones can be predetermined or adjustable. For example, the "red zone" can be determined or set to 1 cycle, this means that the filter is expected to last 1 more cycle of use and then need to be replaced. For example, the "orange zone" can be determined or set to 3 cycles, this means that the filter will last for another 3 use and cleaning cycles before it reaches the red zone. More generally, the "red zone" ("danger") may be predetermined or adjustable to a smaller number of cycles, e.g. 1, 2, 3 or more cycles, and the "orange zone" ("warning") may be predetermined or adjustable to a larger number of cycles before the red zone, e.g. 3, 4, 5, 6, 7, 8, 9 or more cycles. For example, the number of cycles of the orange and red zones may be related to the slope of the trend line, which represents the rate at which the wear part wears out.

The trend 11 thus forms a way of making a prediction. In this case, almost breaking the lower limit means that the wear on the filter is such that it is better to replace the filter preventively. In this way, it is possible to prevent the filter from being placed back in the industrial plant and allowing particles to pass through that should be stopped.

The lower limit 12 of Fig. 1 can be a predetermined value, but is preferably a dynamic limit value that is adjusted over time by the management system.

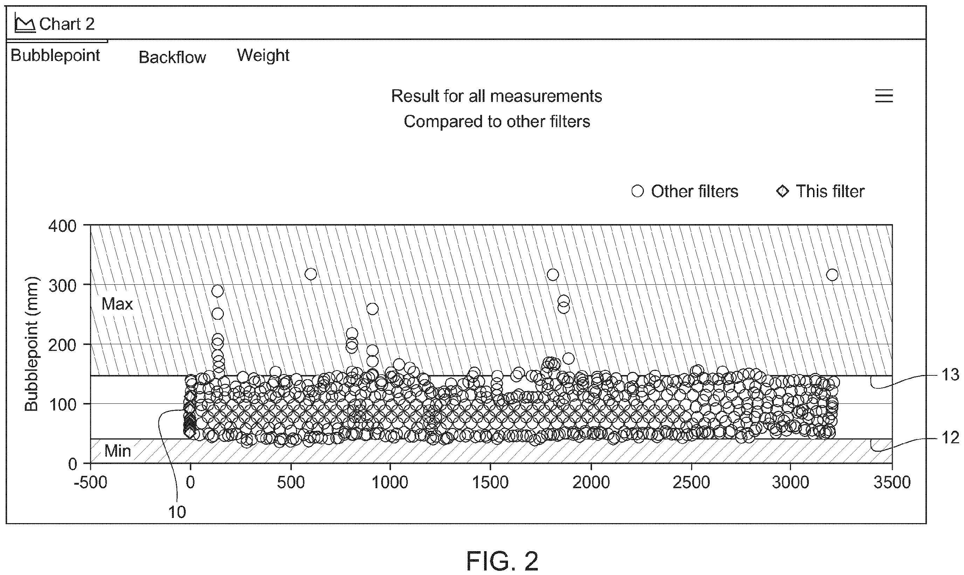

Fig. 2 shows an example of how the limit values 12, 13 of the range of each operating parameter, defined in the management system, can be dynamically determined. In the example shown, the measured values 10 for the bubble point of the filter of Fig. 1 are shown together with a plurality of measured values stored in the management system from filters of the same type. On the basis of such a graph, boundaries can be determined on the basis of methods known in statistics, for example by determining the median and the standard deviation σ. For example, one can set the limits to 2x the standard deviation σ, this means that all values located within a range of 2x the standard deviation σ from the median (i.e. almost 95% of the measurements) are considered to be "good", i.e. located within the desired range. This amounts to almost 95% of the measured values. The measured values that are further away from the median are then considered to be "not good" (a worn filter), i.e. in this case, the bubble point value is too low according to the requirements for the plant. It goes without saying that the boundaries can be set at any desired distance from the median, such as 1 × σ (68%), 1.5 × σ, 2 × σ (95%), 2.5 × σ, 3 × σ (99%), etc. The lower limit and upper limit can also be set separately from each other, i.e. the lower limit can be set at a different distance from the median than the upper limit. In the example of Fig. 2, only the lower limit 12 of the 2 × σ range is used as the dynamic threshold value for the bubble point in Fig. 1.

In order to obtain a sufficient number of measured values to determine the limit values with sufficient accuracy, it may be sufficient to test all filters removed and maintained from a plant once. With a conventional plant, this can already yield 100 or more measured values. During subsequent maintenance cycles, the limit values can then be refined and after a number of maintenance cycles, the limit values will remain more stable. The initial set of measured values preferably includes at least 50 measured values, preferably at least 75 measured values, and more preferably at least 100 measured values.

The trend may initially be set at a predetermined slope that corresponds to an expected wear (or rate of wear). After a number of cycles, for example at least 3, 4, 5, 6, 7 or more cycles, preferably at least 5 cycles, the dataset can be considered "useful" or sufficient to determine the trend line based on the measurements.

In this way, based on an initial set of measurements of a multitude of filters of the same type and a statistical approach as described above, for example, a self-learning management system can be created, which learns from the filters that come back for maintenance, what the desired range is for the measured values of the bubble point or another operating parameter. As the number of measured values in the system increases, the limit values that are (statistically) determined in this way can be dynamically adjusted and refined over time. In other words, the more measurements there are, the better the limit values. The self-learning management system does not even have to use artificial intelligence, although it is not excluded that artificial intelligence can be applied in the management system within the scope of the invention.

For industrial filters, depending on the situation and/or the plant in which they are used, similar graphs can also be made for the weight of the filter and the back pressure or "backflow" generated by the filter, based on the laboratory measurements performed. These graphs or operating parameters provide additional possibilities to monitor clogging and/or loss of own material in an individual filter so that preventive action can also be taken on the basis of these parameters.

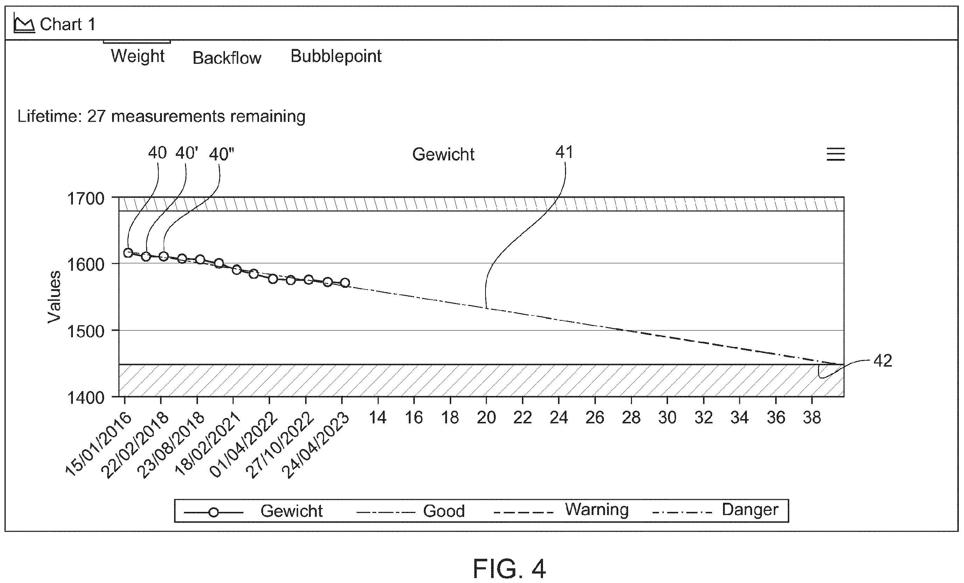

Fig. 4 shows an example of a graph and threshold value 42 based on measurement points 40, 40', 40" the weight of a filter. As can be seen, the weight of the filter decreases after each cleaning because after each (chemical) cleaning, part of the material of the filter wears off with it. Just as in the embodiment with the bubble point, the threshold value 42 can be statistically determined here on the basis of weight measurements of a plurality of filters. The trend line is again a straight line 41 in the embodiment shown. The "red zone" ("danger") here comprises 4 cycles and the "orange zone" ("warning") comprises 8 cycles.

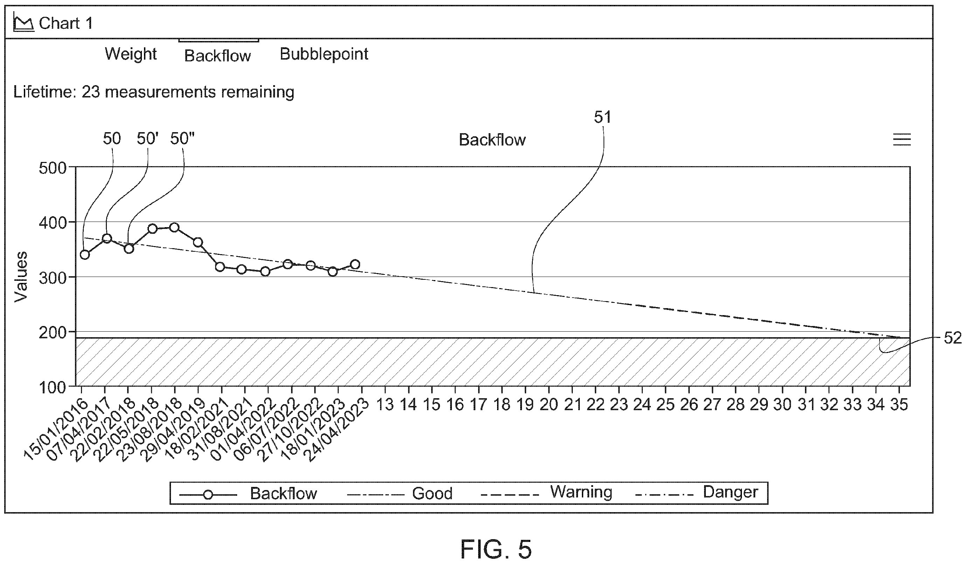

Fig. 5 shows an example of a graph and threshold value based on measurement points 50, 50', 50" of the back pressure of the filter. This back pressure can be measured in a laboratory set-up by measuring the differential pressure across the filter at a certain flow. As can be seen, the backflow fluctuates slightly but decreases over time. The fluctuation can be explained by the fact that chemical cleaning sometimes does not remove all deposited particles. The decrease in backflow over time can again be explained by the fact that material from the filter wears off and the filter openings become larger. In other cases, it is also possible that the backflow increases over time, because during use more and more particles are deposited that can no longer be removed by cleaning and because the filter openings consequently become smaller over time. Just as in the version with the bubble point, the threshold value 52 can be statistically determined on the basis of backflow measurements of a plurality of filters. The trend line is again a straight line 51 in the embodiment shown. The "red zone" ("danger") here comprises 3 cycles and the "orange zone" ("warning") comprises 8 cycles.

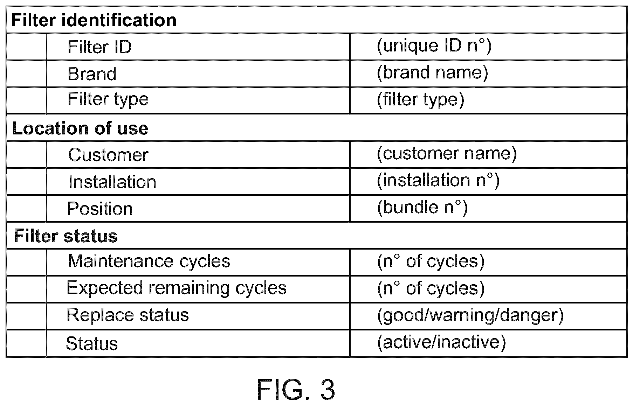

Fig. 3 shows a screen of the management system with a datasheet or the data that can be stored per filter or wear part. A number of fields can be used to identify the filter, such as a (unique) identification number, brand, type, one or more filter specifications, etc. A number of fields can be used to indicate where the filter is used, such as "customer" (operator or data regarding the plant in which the filter is used), plant and position in the plant (bundle number), etc. Furthermore, one or more fields can be used with regard to the status, such as the number of times the filter has already been maintained, the expected (remaining) lifespan or the number of remaining maintenance cycles, a risk factor that indicates a risk that the filter will allow unwanted particles to pass through (see the green zone, orange zone, red zone described above), etc.

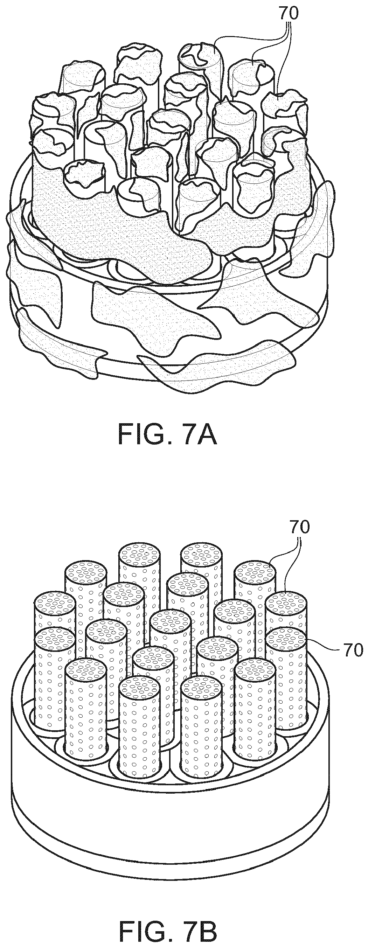

Fig. 7 shows a different type of wear part, namely a bundle of strainers 70 before a maintenance (Fig. 7A) and after a maintenance (Fig. 7B). As with the filter elements, the wear on these strainer elements can be monitored in a management system as described herein on the basis of an operating parameter, such as bubble point, weight, backflow or others. This makes it possible to determine a trend and predict, based on the trend, when the operating parameter of the strainer element will no longer be within the desired range. In the same way, one or more threshold values of the desired range can be dynamically adjusted by using the methods described herein.

In further embodiments of the methods and systems described above, a combination of several operating parameters can also be made, wherein a range and a trend are determined for each operating parameter according to the methods described herein. In such embodiments, it may be stipulated that a wear part is considered worn and/or needs to be replaced if at least one measured value of one of the operating parameters falls outside the relevant range.

## Claims

1. A method for the preventive maintenance of an industrial plant comprising the following steps:
a) the maintenance of a wear part removed from the industrial plant;
b) testing of the wear part removed from the industrial plant after the maintenance step, wherein, for at least one operating parameter of the wear part, it is determined whether this operating parameter is within a predefined range limited by at least one threshold value; and
c) repeating steps a and b at least once after a period of use of the wear part in the industrial plant and removing the wear part from the industrial plant again;
**characterized in that** the method comprises the following steps:
d) determining a trend for the operating parameter of the wear part based on the tests; and
e) predicting, based on the trend, when the operating parameter of the wear part will no longer be within the predetermined range;
wherein at least one threshold value of the predefined range is a dynamic threshold value, and wherein the dynamic threshold value is determined on the basis of a set of measured values for the operating parameter obtained after maintenance and testing wear parts of the same type.

2. The method according to claim 1, wherein the dynamic threshold value is adjusted over time on the basis of additional measured values for the operating parameter obtained in the same way.

3. The method according to any one any one of the preceding claims, wherein the dynamic threshold value is determined statistically, preferably by determining the median and the standard deviation σ of the set of measured values.

4. The method according to claim 3, wherein the dynamic threshold value is set to 1 to 3 × σ, preferably 2 × σ.

5. The method according to any one of the preceding claims, wherein the wear part is a filter.

6. The method according to any one of the preceding claims, wherein the at least one operating parameter is chosen from the group comprising: weight, bubble point, backflow.

7. The method according to any one of the preceding claims, wherein the set of measured values comprises an initial set of at least 50 measured values, preferably at least 75 measured values, more preferably at least 100 measured values.

8. The method according to any one of the preceding claims, wherein the trend is initially set to a predetermined slope that corresponds to an expected wear of the wear part and where the trend is determined on the basis of these measured values after a predetermined series of measured values obtained for the wear part in question, preferably after a series of at least 5 measured values.

9. A computer-implemented method for managing wear parts of an industrial plant, comprising the following steps for each wear part:
a') receiving measured values relating to at least one operating parameter of a wear part, where the measured values have been measured when testing the wear part after a maintenance step, wherein the wear part has been removed from the industrial plant;
b') determining, on the basis of the measurement results, whether the operating parameter of the wear part is within a predetermined range limited by at least one threshold value; and
c') repeating steps a' and b' at least once after a period of use of the wear part in the industrial plant and removing the wear part from the industrial plant again;
**characterized by** the following steps:
d') determining a trend for the operating parameter of the wear part based on the measured values received; and
e') predicting, based on the trend, when the operating parameter of the wear part will no longer be within the predetermined range;
wherein at least one threshold value of the predefined range is a dynamic threshold value, and wherein the dynamic threshold value is determined on the basis of a set of measured values for the operating parameter obtained during the testing of wear parts of the same type each time after a maintenance step.

10. The computer-implemented method according to claim 9, wherein the dynamic threshold value is adjusted over time on the basis of additional, similarly obtained measured values for the operating parameter.

11. The computer-implemented method claim 9 or 10, wherein the dynamic threshold value is determined statistically, preferably by determining the median and standard deviation σ of the set of measured values.

12. The computer-implemented method according to claim 11, wherein the dynamic threshold value is set to 1 to 3 × σ, preferably 2 × σ.

13. The computer-implemented method according to any one of claims 9-12, wherein the wear part is a filter.

14. The computer-implemented method according to any one of claims 9-13, wherein at least one operating parameter was chosen from the group comprising: weight, bubble point, backflow.

15. The computer-implemented method according to any one of claims 9-14, wherein the set of measured values includes an initial set of at least 50 measured values, preferably at least 75 measured values, with more preferably at least 100 measured values.

16. The computer-implemented method according to any one of claims 9-15, wherein the trend is initially set to a predetermined slope corresponding to an expected wear of the wear part and where the trend is determined on the basis of these measured values after a predetermined series of measured values obtained for the respective wear part, preferably after a series of at least 5 measured values.

17. A computer system on which the computer-implemented method according to any one of claims 9-16 is implemented.

18. A permanent data carrier on which the computer-implemented method according to any one of claims 9-16 is stored in a computer-readable format.
